**Europäisches Patentamt**

**European Patent Office**

**Office européen des brevets**

(19)

(11) Veröffentlichungsnummer: **0 170 691**
**B1**

(12) **EUROPÄISCHE PATENTSCHRIFT**

(45) Veröffentlichungstag der Patentschrift:
**18.05.88**

(21) Anmeldenummer: **85901005.0**

(22) Anmeldetag: **07.02.85**

(86) Internationale Anmeldenummer:
**PCT/EP 85/00045**

(87) Internationale Veröffentlichungsnummer:
**WO 85/03488 (15.08.85 Gazette 85/18)**

(51) Int. Cl.⁴: **B 65 B 47/04,** B 29 C 51/08,
B 29 C 51/30

(54) **VERPACKUNGSMASCHINE.**

(30) Priorität: **09.02.84 DE 3404619**

(43) Veröffentlichungstag der Anmeldung:
**12.02.86 Patentblatt 86/7**

(45) Bekanntmachung des Hinweises auf die Patenterteilung:
**18.05.88 Patentblatt 88/20**

(84) Benannte Vertragsstaaten:
**BE CH DE FR LI NL SE**

(56) Entgegenhaltungen:
**US-A-2 988 208**

(73) Patentinhaber: **MULTIVAC SEPP HAGGENMÜLLER KG, D-8941 Wolfertschwenden (DE)**

(72) Erfinder: **MEDWED, Emmerich, Bergstr. 3, D-8941 Wolfertschwenden (DE)**

(74) Vertreter: **Prüfer, Lutz H., Dipl.- Phys., Harthauser Strasse 25d, D-8000 München 90 (DE)**

EP 0 170 691 B1

## Beschreibung

Die Erfindung betrifft eine Verpackungsmaschine mit einer Formstation zum Formen eines Behälters aus einer Materialbahn mittels eines Formstempels mit wenigstens einer Seitenwand, einem Bodenbereich und einem Randbereich dazwischen, mit drehbar gelagerten Wälz- bzw. Rollkörpern im Randbereich und einer den Wälz- bzw. Rollkörper gegen Herausfallen sichernden Halterung mit einer Fassung, wobei der Wälz- bzw. Rollkörper derart versenkt angeordnet ist, daß ein Teil seiner Oberfläche einen Teil des Randbereiches bildet.

Eine derartige Verpackungsmaschine ist in der US-PS-29 88 208 beschrieben. Der Formstempel dieser Verpackungsmaschine weist in den unteren Ecken drehbar gelagerte Kugeln und entlang der unteren Kanten drehbar gelagerte Rollen auf.

Aufgabe der Erfindung ist es, die Verpackungsmaschine so zu verbessern, daß die Wälz- bzw. Rollkörper auf bessere Weise gelagert werden können. Gleichzeitig soll eine gezielte Erwärmung bzw. Kühlung der Wälz- bzw. Rollkörper möglich sein.

Diese Aufgabe wird durch eine Verpackungsmaschine der eingangs beschriebenen Art gelöst, die dadurch gekennzeichnet ist, daß die Halterung einen Gleitlagereinsatz mit einer der Form des Wälz- bzw. Rollkörpers angepaßten Lagerschale aufweist und daß in der Halterung ein Kanal vorgesehen ist, dessen eines Ende in die Lagerschale mündet und dessen anderes Ende mit einer Leitung zur Zufuhr von gasförmigem Medium verbindbar ist. Bei dieser Lösung wird die Lagerung verbessert. Die Zufuhr eines geeigneten gasförmigen Mediums verbessert einerseits die Lagereigenschaft und ermöglicht andererseits die gezielte Erwärmung bzw. Abkühlung der beaufschlagten Wälz- bzw. Rollkörper.

Weitere Merkmale der Verpackungsmaschine sind in dem Unteranspruch gekennzeichnet.

Die Verpackungsmaschine wird im folgenden anhand von Ausführungsbeispielen im Zusammenhang mit den Figuren beschrieben. Von den Figuren zeigen:

Fig. 1 eine schematische Seitenansicht einer Verpackungsmaschine;

Fig. 2 eine schematische Darstellung eines Schnittes durch die Formstation der Verpackungsmaschine;

Fig. 3 eine perspektivische Ansicht eines Formstempels;

Fig. 4 einen Schnitt durch eine Ecke des Formstempels in einer Ebene in Bewegungsrichtung des Formstempels;

Fig. 5 einen Schnitt durch eine Ecke einer anderen Ausführungsform des Formstempels in einer Ebene in Bewegungsrichtung des Formstempels;

Fig. 6 einen Schnitt durch eine Ecke des Formstempels entlang der Linie VI-VI in Fig. 5.

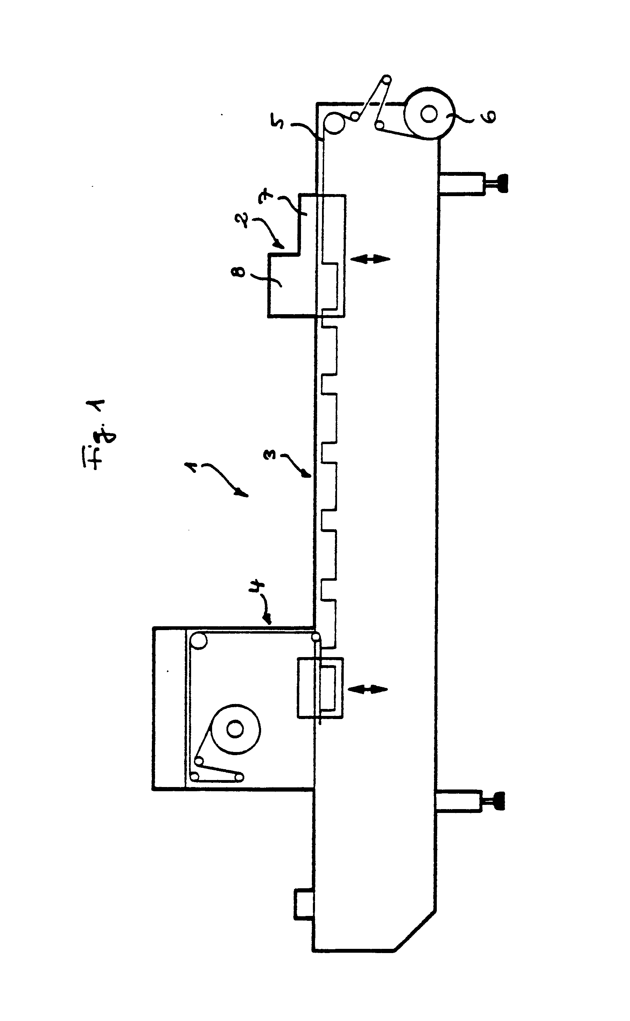

In Fig. 1 ist eine Seitenansicht einer Vakuum-Verpackungsmaschine mit einer Formstation 2, einer Füllstation 3 und einer Evakuier- und Versiegelstation 4 schematisch dargestellt. Eine Materialbahn 5 wird von einer Vorratsrolle 6 abgezogen und nacheinander durch die Formstation 2, die Füllstation 3 und die Evakuier- und Versiegelstation 4 bewegt.

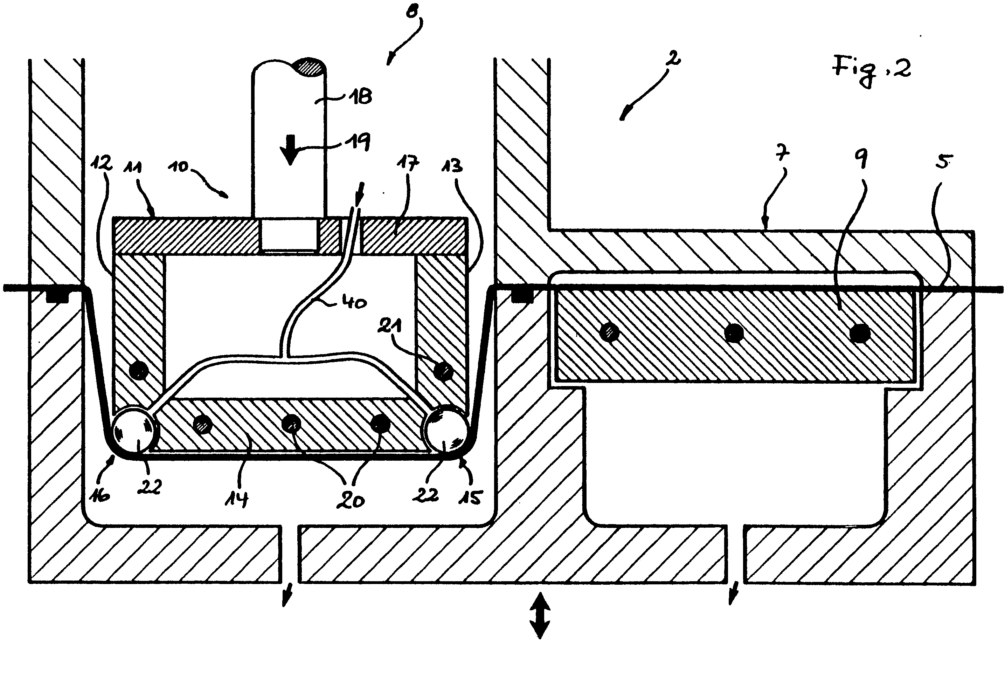

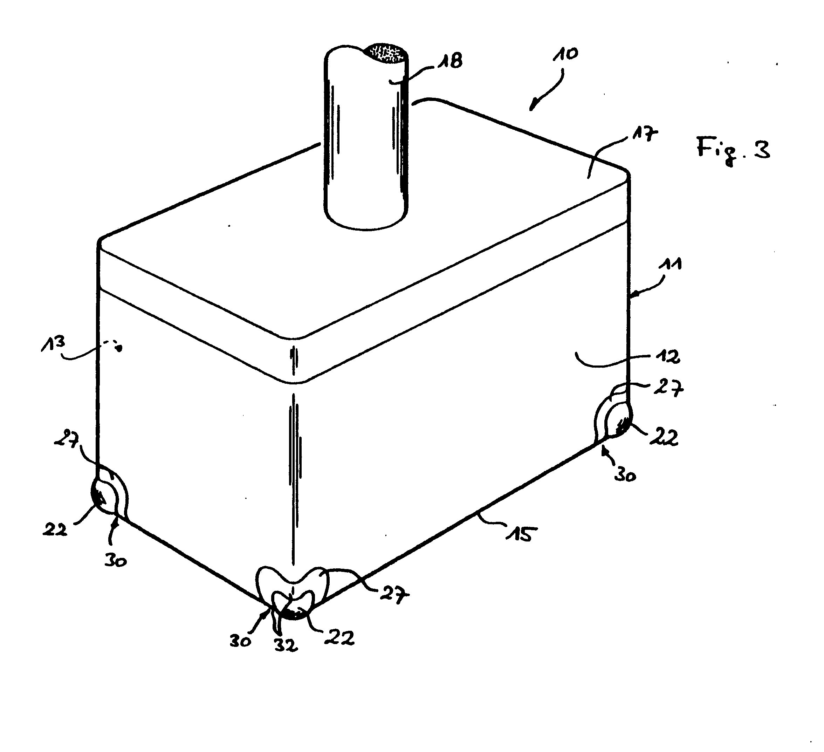

Wie in Fig. 1 schematisch dargestellt und insbesondere aus Fig. 2 ersichtlich ist, weist die Formstation 2 einen Heizbereich 7 und einen in Laufrichtung der Materialbahn 5 daran anschließenden Formbereich 8 auf. Im Heizbereich 7 ist eine Heizplatte 9 vorgesehen, die zum Erwärmen der Materialbahn 5 mit dieser in Kontakt bringbar ist. Im Formbereich 8 ist ein Formstempel 10 vorgesehen, der, wie insbesondere aus Fig. 3 ersichtlich ist, einen im wesentlichen kastenförmigen Stempelkopf 11 mit Seitenwänden 12, 13, einem Bodenbereich 14, einem Randbereich 15, 16 zwischen den Seitenwänden 12, 13 und dem Bodenbereich 14 und einer Deckwand 17 sowie einen mit der Deckwand 17 verbundenen Stempelschaft 18 aufweist. Der Stempelschaft 18 ist mit einem (nichtgezeigten) Antrieb zum Bewegen des Formstempels 10 in Richtung des Pfeiles 19 senkrecht zur Ebene der Materialbahn 5 verbunden. In den Seitenwänden 12, 13 und im Bodenbereich 14 sind Heizelemente 20, 21 zum Beheizen des Stempelkopfes 11 vorgesehen.

Wie insbesondere aus den Fig. 2 und 3 ersichtlich ist, sind in einem Teil des Randbereiches 15, 16 des Formstempels 10, nämlich in den unteren Ecken, Wälz- bzw. Rollkörper in Form von Kugeln 22 derart versenkt angeordnet, daß diese geringfügig über die von den Seitenwänden 12, 13, dem Bodenbereich 14 und den Randbereichen 15, 16 gebildete Kontur des Stempelkopfes 11 nach außen hervorstehen. Selbstverständlich können die Kugeln 12 auch mit dieser Kontur bündig abschließen. Dies wird dadurch erreicht, daß der Radius der Kugeln 22 im wesentlichen dem Krümmungsradius der Randbereiche 15, 16 entsprechend gewählt ist und die Kugeln 22 derart angeordnet sind, daß der Mittelpunkt 23 etwa mit dem Krümmungsmittelpunkt der Randbereiche 15, 16 zusammenfällt oder etwas außerhalb von diesem liegt. Dadurch bildet die Oberfläche der Kugeln 22 einen Teil der Oberfläche des Formstempels 10 in dessen unteren Ecken.

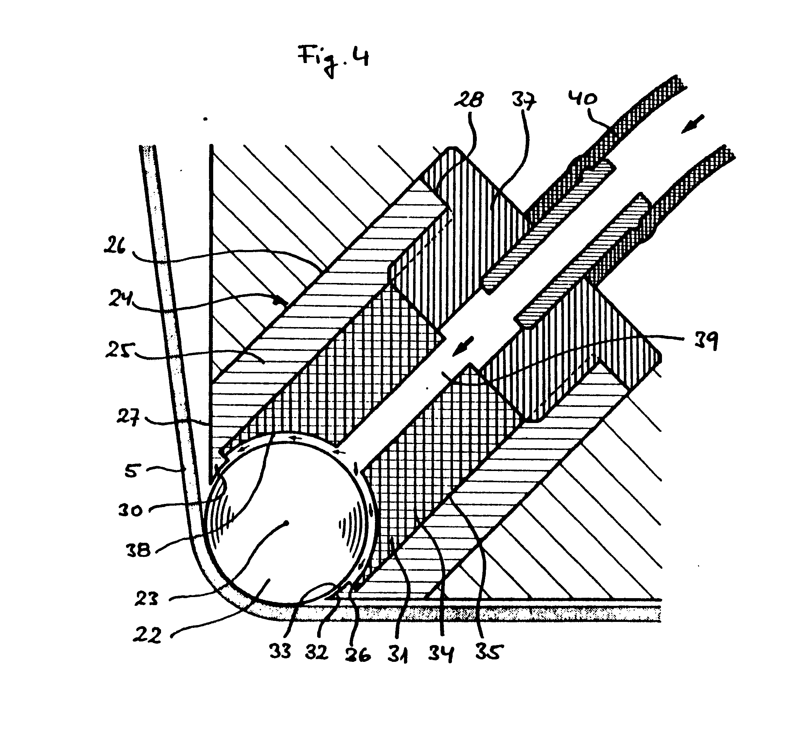

In dieser Lage sind die Kugeln 22 frei drehbar gelagert. Zu diesem Zweck dient eine in Fig. 4 dargestellte Halterung 24. Diese weist eine zylindrische Hülse 25 auf, die in eine Bohrung 26 im Formstempel 10 eingesetzt ist. Die Bohrung 26 ist dabei derart angeordnet, daß ihre Achse durch die zugehörige Ecke des Formstempels geht und mit den an die Ecke anschliessenden Seitenwänden 12, 13 und dem Bodenbereich 14 im wesentlichen gleiche Winkel einschließt.

Die Hülse 25 weist eine sich von einer ersten Stirnfläche 27 zu einer zweiten Stirnfläche 28 längs durch die Hülse erstreckende Innenbohrung 29 zur Aufnahme der Kugel 22, eine Fassung 30 zum Halten der Kugel 22 gegen Herausfallen und einen Gleitlagereinsatz 31 zur drehbaren Lagerung der Kugel 22 auf. Die Fassung 30 ist dadurch gebildet, daß die Innenbohrung 29 in einem an die erste Stirnfläche 27 angrenzenden ersten Abschnitt 33 einen Durchmesser aufweist, der etwas kleiner als der Durchmesser der Kugel 22 ist, und daß die erste Stirnfläche 27 in der in die Bohrung 26 eingesetzten Lage der Hülse 25 etwa mit den Seitenwänden 12, 13 und dem Bodenbereich 14 bündig abschließt. Dadurch werden an der ersten Stirnfläche 27 drei Fassungsteile in Form von um 120° gegeneinander versetzten, vorspringenden Nasen 32 gebildet, die die Kugel 22 an drei Stellen teilweise umgreifen und dadurch am Herausfallen hindern.

Der Gleitlagereinsatz 31 besteht aus einem zylindrischen Körper 34, der aus einem Material gefertigt ist, das gegenüber der vorzugsweise aus Stahl gefertigten Kugel 22 einen geringen Reibungskoeffizienten hat, wie beispielsweise Teflon oder Nylon. Der Körper 34 ist in einen an den ersten Abschnitt 33 angrenzenden zweiten Abschnitt 36 der Innenbohrung 29 eingesetzt, dessen Durchmesser größer als der des ersten Abschnittes 33 ist. Zwischen dem ersten Abschnitt 33 und dem zweiten Abschnitt 35 ist damit ein Absatz 36 gebildet, gegen den der Körper mit seiner einen Stirnfläche anliegend von einer Schraube 37 gedrückt wird, die in die Hülse 25 an deren zweiter Stirnfläche eingeschraubt ist. Der Körper 34 weist auf seiner dem Absatz 36 zugewandten Stirnseite eine Lagerschale 38 in Form einer halbkugelförmigen Aushöhlung auf, deren Radius im wesentlichen dem Radius der Kugel 22 entspricht. Die Lagerschale 38 bildet damit eine Gleitlagerfläche, auf der die Kugel 22 nach allen Richtungen frei drehbar gleiten kann.

Ferner ist ein Kanal 39 vorgesehen, der sich durch den Körper 34 und die Schraube 37 hindurcherstreckt und die Aushöhlung bzw. Lagerschale 38 mit einer an der Schraube 37 befestigten Leitung 40 verbindet, die mit einer Zufuhr von gasförmigem Medium verbunden ist.

Im Betrieb wird ein zu verformender Abschnitt der Materialbahn 5 zunächst im Heizbereich 7 mittels der Heizplatte 9 auf eine geeignete Verformungstemperatur erwärmt und anschließend in den Formbereich 8 transportiert. Dabei befindet sich der Formstempel 10 zunächst in einer angehobenen Position oberhalb der Materialbahn 5. Zum Formen eines Behälters wird der Formstempel 10 anschließend über die Ebene der Materialbahn 5 hinaus in Richtung des Pfeiles 19 nach unten bewegt. Dabei kommt zunächst der Bodenbereich 14 mit der Materialbahn 5 in Eingriff. Bei weiterer Abwärtsbewegung des Formstempels 10 wandert mit zunehmender Verformung der Materialbahn 5 zu einem Behälter ein Teil des Materials, das zunächst mit dem Bodenbereich 14 in Eingriff war, in die neu gebildeten Seitenwände des gebildeten Behälters. Dieses Material gleitet also an den Randbereichen 15, 16 des Formstempels 10 und in den Ecken an der Oberfläche der Kugeln 22 entlang. Dadurch wälzen sich die Kugeln 22 auf der verformten Materialbahn ab und gleiten gleichzeitig auf der Lagerschale 38, was zu einer wesentlichen Verringerung der an den Ecken auftretenden, an der Materialbahn angreifenden Reibkräfte führt und damit die Gefahr einer Beschädigung der Materialbahn 5 an den beim Verformen besonders beanspruchten Ecken verringert. Die Reibung der Kugeln 22 in den Lagerschalen 38 kann noch dadurch weiter verringert werden, daß durch die Leitung 40 und den Kanal 39 gasförmiges Medium zwischen die Kugeln 22 und die Lagerschalen 38 gepreßt wird. Durch geeignete Wahl der Temperatur dieses gasförmigen Mediums ist es möglich, damit gleichzeitig eine gezielte Erwärmung oder Kühlung der Materialbahn 5 an den Ecken des Formstempels 10 durchzuführen. Nach dem Verformen durch den Formstempel kann der Behälter dann durch Beaufschlagung mit einem Differenzdruck an die Innenwand des Formbereiches 8 gedrückt und dadurch in ihre endgültige Form gebracht werden.

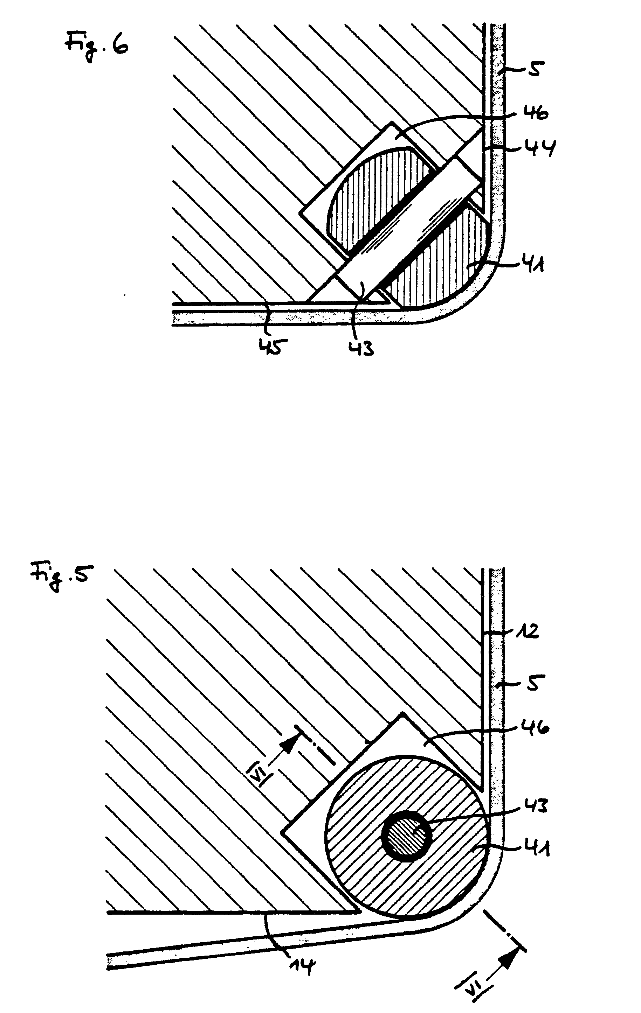

In den Fig. 5 und 6 ist eine weitere Ausführungsform der Erfindung dargestellt. Anstelle der Kugel 22 ist bei dieser Ausführungsform in einer Eckenaussparung 46 des Formstempels 10 eine Rolle 41 mit einer balligen Umfangsfläche 42 angeordnet. Vorzugsweise besitzt die Rolle 41 die Form eines symmetrischen Kugelabschnittes. Die Rolle ist um eine Achse 43 drehbar gelagert, die in einer Ebene liegt, welche senkrecht zur Bewegungsrichtung 19 des Formstempels 10 angeordnet ist, und die in dieser Ebene im wesentlichen senkrecht zur Winkelhalbierenden der Schnittlinien 44, 45 der beiden Seitenwände 12, 13 mit dieser Ebene angeordnet ist. Durch Drehung der Rolle 41 um die Achse 43 kann sich die Rolle 41 beim Verformen der Materialbahn 5 auf dieser abwälzen, wodurch ebenfalls die Reibung der Materialbahn an den Ecken des Formstempels 10 verringert wird.

**Patentansprüche**

1. Verpackungsmaschine mit einer Formstation (2) zum Formen eines Behälters aus einer Materialbahn (5) mittels eines Formstempels (10) mit wenigstens einer Seitenwand (12, 13), einem Bodenbereich (14) und einem Randbereich (15, 16) dazwischen, mit drehbar gelagerten Wälz- bzw. Rollkörpern (22) im Randbereich (15, 16) und einer den Wälz- bzw. Rollkörper (22) gegen Herausfallen sichernden Halterung (24) mit einer Fassung (30), wobei der Wälz- bzw. Rollkörper (22) derart versenkt angeordnet ist, daß ein Teil seiner Oberfläche einen Teil des Randbereiches (15, 16) bildet,
dadurch gekennzeichnet, daß die Halterung (24) einen Gleitlagereinsatz (31) mit einer der Form des Wälz- bzw. Rollkörpers (22) angepaßten Lagerschale (38) aufweist und daß in der Halterung (24) ein Kanal (39) vorgesehen ist, dessen eines Ende in die Lagerschale (38) mündet und dessen anderes Ende mit einer Leitung (40) zur Zufuhr von gasförmigem Medium verbindbar ist.

2. Verpackungsmaschine nach Anspruch 1, dadurch gekennzeichnet, daß die Halterung (24) als Hülse (25) ausgebildet ist, welche an ihrem einen Ende drei umfangsmäßig um 120° versetzt angeordnete, vorspringende Fassungsteile (32) aufweist und in die ein zylindrischer Gleitlagereinsatz (31) eingesetzt ist, der an seinem den Fassungsteilen (32) zugewandten einen Ende eine kugelkalottenförmige Lagerschale (38) aufweist und in der Hülse (25) mittels eines an ihrem anderen Ende angreifenden Befestigungselementes (37) gehalten ist.

## Claims

1. Packaging machine comprising a forming station (2) for forming a container from a web material (5) by means of a forming die (10) having at least a side wall (12, 13), a bottom portion (14), and an edge portion (15, 16) therebetween, rotatably supported ball bearings or roller bearings (22), respectively, in the edge portion (15, 16), and a mounting (24) securing the ball bearing or roller bearing (22), respectively, against falling out and including a holder (30), the ball bearing or roller bearing (22), respectively, being disposed sunk-in such that a part of its surface forms a part of the edge portion (15, 16), characterized in that the mounting (24) comprises a sliding bearing insert (31) having a bearing shell (38) being adapted to the shape of the ball bearing or roller bearing (22), respectively, and that a channel (39) is provided in the mounting (24), one end of which opens into the bearing shell (38) and the other end of which is connectable with a line (40) for supplying a gaseous medium.

2. Packaging machine in accordance with claim 1, characterized in that the mounting (24) is formed as a bushing (25) comprising at one end thereof three projecting holder parts (32) being circumferentially spaced apart by 120° and into which a cylindrical sliding bearing insert (31) is inserted which comprises at its one end facing the holder parts (32) a callotte shaped bearing shell (38) and which is supported in the bushing (25) by means of a fixing element (37) engaging the other end of the bushing.

## Revendications

1. Machine d'emballage comprenant un poste de formage (2) destiné à former un récipient à partir d'une bande de matière (5), au moyen d'un poinçon de formage (10) présentant au moins une paroi latérale (12, 13), une région de fond (14) et une région de bord (15, 16) interposée entre la paroi latérale et la région de fond, des corps roulants (22) montés rotatifs dans la région de bord (15, 16), et une monture (24) munie d'une sertissure (30), qui retient les corps roulants (22) en les empêchant de tomber, le corps roulant (22) étant agencé encastré de telle manière qu'une partie de sa surface forme une partie de la région de bord (15, 16), caractérisée en ce que la monture (24) comprend un coussinet de portée lisse (31) qui présente une cuvette de portée (38) adaptée à la forme du corps roulant (22) et en ce qu'il est prévu, dans la monture (24), un canal (39) dont une extrémité débouche dans la cuvette de portée (38) et dont l'autre extrémité peut être reliée à une conduite (40) servant à acheminer un fluide gazeux.

2. Machine d'emballage selon la revendication 1, caractérisée en ce que la monture (24) est constituée par une douille (25) qui présente, à l'une de ses extrémités, trois parties de sertissure (32) saillantes, disposées dans des positions décalées de 120° sur la circonférence et dans laquelle est encastré un coussinet cylindrique de portée lisse (31) qui présente une cuvette de portée (38) en forme de calotte de sphère à celle de ses extrémités qui est dirigée vers les parties de sertissure (32) et qui est tenu dans la douille (25) au moyen d'un élément de fixation (37) qui attaque son autre extrémité.

Fig. 1

Fig. 2

Fig. 3

0170 691

Fig. 4

**Fig. 6**

**Fig. 5**